# EUROPÄISCHE PATENTSCHRIFT

(11) **EP 0 845 145 B1**
(45) Veröffentlichungstag und Bekanntmachung des Hinweises auf die Patenterteilung: **13.10.2004**
(21) Anmeldenummer: 97922898.8
(22) Anmeldetag: 09.05.1997
(51) Int. Cl.: G12B 11/04, G01D 13/22

(54) **ZEIGEREINRICHTUNG**
POINTER INDICATOR
INDICATEUR A AIGUILLE

(30) Priorität: 17.06.1996 DE 19624081
(43) Veröffentlichungstag der Anmeldung: 03.06.1998
(73) Patentinhaber: ROBERT BOSCH GMBH, 70442 Stuttgart (DE)
(72) Erfinder: OREANS, Derk, D-63811 Stockstadt (DE); HERZOG, Bernhard, D-70619 Stuttgart (DE)
(86) Internationale Anmeldenummer: PCT/DE1997/000935
(87) Internationale Veröffentlichungsnummer: WO 1997/049090

(56) Entgegenhaltungen:
- EP-A- 0 295 165
- DE-A- 3 201 571
- DE-A- 3 347 014
- DE-A- 3 425 029
- FR-A- 2 672 676
- FR-A- 2 710 978
- PATENT ABSTRACTS OF JAPAN vol. 096, no. 011, 29.November 1996 & JP 08 193852 A (KANSEI CORP), 30.Juli 1996,

## Beschreibung

### Stand der Technik

Die Erfindung geht aus von einer Zeigereinrichtung nach der Gattung des Hauptanspruchs. Eine solche Zeigereinrichtung ist bereits aus der DE 33 47 014 C2 bekannt. Diese Zeigereinrichtung hat einen um eine Zeigerachse drehbar gelagerten Zeiger, welcher aus transparenten lichtleitendem Material besteht. Auf der dem Betrachter abgewandten Seite des Zeigers ist fest eine Lichtquelle montiert, deren Licht axial zur Zeigerachse in das lichtleitende Material des Leuchtzeigers eingekoppelt wird. Das so axial eingekoppelte Licht ist über einen Lichtleiteinsatz in die radiale Längserstreckungsrichtung des Zeigers umlenkbar.

Aus der DE 34 25 029 A1 ist eine Beleuchtungseinrichtung in einem Messinstrument bekannt, bei dem ein Zeiger des Messinstruments ein Zwischenteil aufweist, das einen lichtempfangenden Abschnitt bildet. In dem Zeiger sind offene Hohlräume ausgebildet, die von reflektierenden Flächen eines Einsatzes begrenzt sind. Die reflektierenden Flächen dienen dazu, das Licht des Zeigers in die Zeigerfahne umzulenken. Aus der DE 32 01 571 A1 ist eine Anzeigevorrichtung mit einem vor einem Zifferblatt um eine Achse drehbaren, aus Nabe und Zeigerarm bestehenden Zeiger bekannt. Der Zeiger besitzt zur Beobachterseite gerichtete Lichtreflexionsflächen, die durch eine Lichtquelle beleuchtbar sind.

Aus der EP 295 165 A1 ist eine Zeigervorrichtung bekannt, bei der das lichtleitende Material des Zeigers mit einem reflektierenden Einsatz durch ein Gussverfahren verbunden ist.

### Vorteile der Erfindung

Die erfindungsgemäße Zeigereinrichtung mit den Merkmalen des Hauptanspruchs hat demgegenüber die Vorteile, dass die Leuchtdichte eines passiven Leuchtzeigers wesentlich erhöht wird. Damit bietet sich der Vorteil, in Fällen, in denen eine sehr gute Ausleuchtung des Zeigers notwendig ist, ebenfalls ein passiver Leuchtzeiger einsetzen zu können und auf den Einsatz eines wesentlich teureren aktiven Leuchtzeigers zu verzichten. Durch die Anordnung wird die praktisch verlustfreie Totalreflexion von Strahlen, die im großen Winkel zur Oberflächennormalen auftreffen, mit der zusätzliche Reflexion von Strahlen, die in kleinem Winkel zur Oberflächennormalen auftreffen, kombiniert.

### Zeichnung

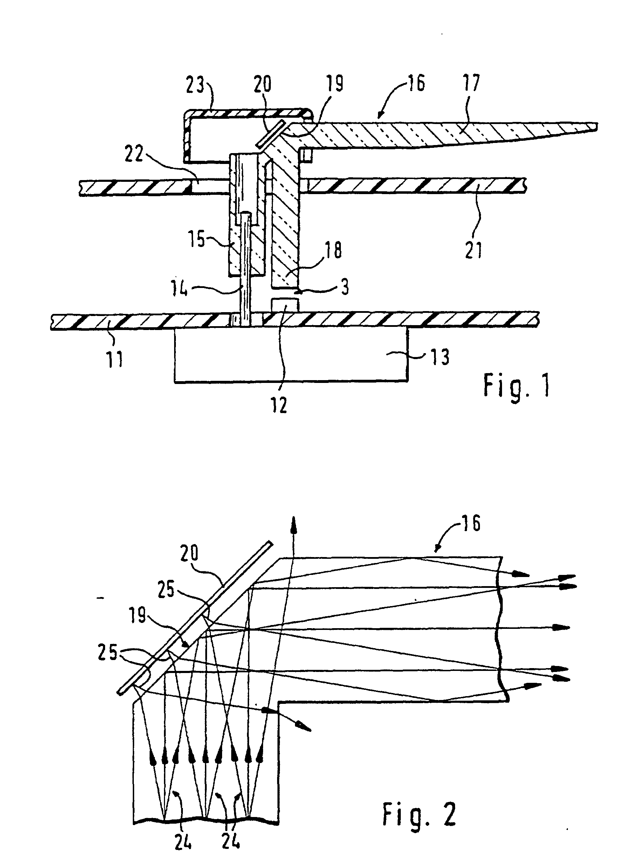

Ausführungsbeispiele der Erfindung sind in der Zeichnung dargestellt und in der nachfolgenden Beschreibung näher erläutert. Es zeigen Figur 1 ein Ausführungsbeispiel der Erfindung und Figur 2 den Strahlengang des Lichtes im Ausführungsbeispiel gemäß Figur 1.

### Beschreibung der Ausführungsbeispiele

Figur 1 zeigt eine Zeigeranordnung mit einem passiven Leuchtzeiger. Hierbei ist im Gegensatz zur aktiven Leuchtzeigern, die Lichtquelle nicht im Zeiger selbst integriert, sondern das Licht wird von einer festmontierten Lichtquelle in den drehbar gelagerten Leuchtzeiger eingekoppelt. In Figur 1 sind auf einer Leiterplatte 11 mehrere Leuchtdioden 12 montiert, wobei hier der einfachheithalber nur eine einzelne Leuchtdiode dargestellt ist. Diese mehreren Leuchtdioden 12 sind vorzugsweise etwa mit einem Abstand von 60° auf der Leiterplatte montiert und kontaktiert. Auf der dem Betrachter abgewandten Seite der Leiterplatte befindet sich ein Meßwerk 13, welches eines Zeigerwelle 14 antreibt, die durch eine Öffnung in der Leiterplatte 11 hindurchgeführt ist. Auf der Zeigerwelle 14 ist der Leuchtzeiger 16 mit seiner Zeigernabe 15 befestigt. Diese Zeigernabe 15 und der Leuchtzeiger 16 sind einteilig aus einem Lichtleiter geformt. Der Leuchtzeiger 16 selbst besteht aus einem, einen rechten Winkel einschließenden, radialen Abschnitt, welcher die Zeigerfahnen 17 darstellt, und einem axialen Abschnitt, welcher einen Lichtholer 18 bildet. Das Licht der Leuchtdioden 12 wird hierbei axial in den Lichtholer 18 eingekoppelt und dann an der Spiegelfläche 19 mittels Totalreflexion in die radiale Zeigerfahne 17 umgelenkt. Parallel zur Spiegelfläche 19 ist mit einem geringen Abstand von der Spiegelfläche 19 ein Oberflächenspiegel 20 vorgesehen. Auf der dem Betrachter abgewandten Seite des Leuchtzeigers 16 befindet sich das Ziffernblatt 21, welches einen Durchbruch 22 aufweist, durch den die Zeigernabe 15 und der Lichtholer 18 hindurchgeführt sind. Der Durchbruch 22 in dem Ziffernblatt 16, die Zeigernabe und der Lichtholer sind durch eine Kappe 23 abgedeckt. Diese Kappe 23 ist innen weiß gefärbt, damit das aus dem Zeiger 16 austretende Licht wieder in den Zeiger zurückreflektiert wird.

Der Strahlenverlauf für die Lichtumlenkung aus dem axialen Teil des Leuchtzeigers 16 in den radialen Teil des Leuchtzeigers 16 ist in Figur 2 dargestellt. Gleiche Teile sind hier mit gleichen Bezugszeichen versehen. Der schematische Verlauf der Lichtausbreitung in dem lichtleitenden Material des Leuchtzeigers 16 ist mit den Pfeilen 24 angegeben. Das Licht tritt dabei aus der hier nicht nochmals dargestellten Leuchtdiode 12 aus und wird in den axialen Lichtholer 18 eingekoppelt. Zusätzlich zu der Spiegelfläche 19, die bereits einen Großteil der Lichtstrahlen in den radialen Teil 17 des Leuchtzeigers 16 umlenkt, ist noch der Vorsatzspiegel 20 vorgesehen. Da ein Teil der Lichtstrahlen der Leuchtdiode aufgrund des Einfallwinkels an der Spiegelfläche 19 aus dem lichtleitenden Material austreten können, ist der Vorsatzspiegel 20 vorgesehen. Die aus dem lichtleitenden Material austretenden Lichtstrahlen 25 werden von dem Oberflächenspiegel 20 wieder zurückreflektiert in den Lichtleiter hinein und damit in die radiale Zeigerfahne des Leuchtzeigers 16. Mit dieser Anordnung ist es möglich, die Lichtstrahlen, die aufgrund ihres großen Einfallwinkels bezogen auf das Lot zur Spiegelfläche 19, im wesentlichen mittels Totalreflexion in die Zeigerfahne 17 eingekoppelt werden, um die Lichtstrahlen, die aufgrund ihres kleinen Einfallswinkels zu verstärken.

Der Oberflächenspiegel 20 kann beispielsweise aus einer metallisch bedampften Kunststofffolie (Polycarbonat) ausgestanzt werden und zunächst in eine dafür vorgesehene Ausformung der Kappe 23 eingelegt und zunächst so fixiert werden. Mit dem Einsetzen des Lichtleiters wird er dann endgültig festgehalten.

## Patentansprüche

1. Zeigereinrichtung mit einem um eine Zeigerachse drehbar gelagerten Leuchtzeiger aus lichtleitendem Material, mit einer außerhalb des Leuchtzeigers festmontierten Lichtquelle, deren Licht parallel zu der Zeigerachse in den Leuchtzeiger eingekoppelt wird, wobei der Leuchtzeiger aus einem radialen Abschnitt, welcher eine Zeigerfahne bildet, und einem axialen Abschnitt, welcher einen Lichtholer bildet, besteht, **dadurch gekennzeichnet, dass** eine Umlenkung von Licht von dem axialen Abschnitt zu dem radialen Abschnitt über eine Spiegelfläche (19) zur Totalreflexion und einen zusätzlichen Oberflächenspiegel (20), der beabstandet zu der Spiegelfläche (19) angeordnet ist, derart erfolgt, dass die an der Spiegelfläche (19) nicht in Totalreflexion reflektierten, aus dem lichtleitenden Material des Leuchtzeigers (16) austretenden Lichtstrahlen (25) an dem Oberflächenspiegel (20) wieder durch die Spiegelfläche (19) hindurch in den Leuchtzeiger (16) hinein zurückreflektiert werden.

2. Zeigereinrichtung nach Anspruch 1, **dadurch gekennzeichnet, dass** der zusätzliche Oberflächenspiegel (20) parallel zur Spiegelfläche (19) angebracht ist.

3. Zeigereinrichtung nach einem der vorherigen Ansprüche, **dadurch gekennzeichnet, dass** der Oberflächenspiegel (20) aus einer metallisch bedampften Kunststofffolie besteht.

4. Zeigereinrichtung nach einem der vorherigen Ansprüche, **dadurch gekennzeichnet, dass** die Lichtquelle (12) auf einer Leiterplatte (11) montiert ist.

5. Zeigereinrichtung nach einem der vorherigen Ansprüche, **dadurch gekennzeichnet, dass** eine Zeigernabe (15) und der Leuchtzeiger (16) einteilig aus einem Lichtleiter geformt sind.

6. Zeigereinrichtung nach einem der vorherigen Ansprüche, **dadurch gekennzeichnet, dass** auf der einem Betrachter abgewandten Seite des Leuchtzeigers (16) ein Zifferblatt (21) angeordnet ist.

7. Zeigereinrichtung nach Anspruch 6, **dadurch gekennzeichnet, dass** in dem Zifferblatt (21) ein Durchbruch (22) zum Durchführen der Zeigernabe (15) und des Lichtholers (18) angeordnet ist und dass der Durchbruch (22), die Zeigernabe (15) und der Lichtholer (18) durch eine Kappe (23) abgedeckt sind.

## Claims

1. Pointer device having a luminous pointer of optically conducting material which is mounted rotatably about a pointer axis, having a light source which is permanently mounted outside the luminous pointer and whose light is launched into the luminous pointer in a fashion parallel to the pointer axis, the luminous pointer comprising a radial portion which forms a pointer vane, and an axial portion which forms a light fetcher, **characterized in that** a deflection of light from the axial portion to the radial portion via a reflecting surface (19) for total reflection and an additional surface mirror (20), which is arranged at a spacing from the reflecting surface (19), is performed in such a way that the light beams (25) reflected without total reflection at the reflecting surface (19) and emerging from the optically conducting material of the luminous pointer (16) are retroreflected again at the surface mirror (20) through the reflecting surface (19) into the luminous pointer (16).

2. Pointer device according to Claim 1, **characterized in that** the additional surface mirror (20) is positioned parallel to the reflecting surface (19).

3. Pointer device according to one of the preceding claims, **characterized in that** the surface mirror (20) consists of a plastic film on which metal has been vapour-deposited.

4. Pointer device according to one of the preceding claims, **characterized in that** the light source (12) is mounted on a printed circuit board (11).

5. Pointer device according to one of the preceding claims, **characterized in that** a pointer hub (15) and the luminous pointer (16) are formed in one piece from a light guide.

6. Pointer device according to one of the preceding claims, **characterized in that** a dial (21) is arranged on the side of the luminous pointer (16) averted from a viewer.

7. Pointer device according to Claim 6, **characterized in that** a cutout (22) for guiding through the pointer hub (15) and the light fetcher (18) is arranged in the dial (21), and **in that** the cutout (22), the pointer hub (15) and the light fetcher (18) are covered by a cap (23).

## Revendications

1. Indicateur à aiguilles comprenant une aiguille lumineuse en matériau conducteur de lumière, et pivotante autour d'un axe de l'aiguille, comprenant une source lumineuse fixée à l'extérieur de l'aiguille lumineuse et dont la lumière est couplée à l'aiguille lumineuse parallèlement à l'axe de l'aiguille,
dans lequel l'aiguille lumineuse comprend une partie radiale, qui forme un drapeau d'aiguilles, et une partie axiale, qui forme un guide de lumière,
**caractérisé en ce que**
un renvoi de lumière est réalisé de la partie axiale vers la partie radiale par une surface de miroir (19) à réflexion totale et un miroir de surface (20) complémentaire, monté à distance de la surface de miroir (19), de telle sorte que les faisceaux lumineux (25) provenant du matériau conducteur de lumière de l'aiguille lumineuse (16) et non réfléchis en réflexion totale sur la surface de miroir (19) sont à nouveau réfléchis sur le miroir de surface (20) à l'intérieur de l'aiguille lumineuse (16) par la surface de miroir (19).

2. Indicateur à aiguilles selon la revendication 1,
**caractérisé en ce que**
le miroir de surface (20) complémentaire est parallèle à la surface de miroir (19).

3. Indicateur à aiguilles selon l'une des revendications précédentes,
**caractérisé en ce que**
le miroir de surface (20) est composé d'une feuille en plastique métallique métallisée sous vide.

4. Indicateur à aiguilles selon l'une des revendications précédentes,
**caractérisé en ce que**
la source lumineuse (12) est montée sur une carte de circuit imprimé (11).

5. Indicateur à aiguilles selon l'une des revendications précédentes,
**caractérisé en ce que**
un moyeu à aiguilles (15) et l'aiguille lumineuse (16) sont formés d'une seule pièce par un conducteur de lumière.

6. Indicateur à aiguilles selon l'une des revendications précédentes,
**caractérisé en ce que**
un cadran (21) est disposé du côté de l'aiguille lumineuse (16) non détourné d'un observateur.

7. Indicateur à aiguilles selon la revendication 6,
**caractérisé en ce que**
dans le cadran (21), un orifice (22) est prévu pour mettre en oeuvre le moyeu à aiguilles (15) et le guide de lumière (18), et l'orifice (22), le moyeu à aiguilles (15) et le guide de lumière (18) sont recouverts par un capuchon (23).
